# EUROPÄISCHE PATENTSCHRIFT

(11) **EP 1 902 983 B1**
(45) Veröffentlichungstag und Bekanntmachung des Hinweises auf die Patenterteilung: **15.08.2012**
(21) Anmeldenummer: 07115031.2
(22) Anmeldetag: 27.08.2007
(51) Int. Cl.: B65G 47/91, B65G 1/137

(54) **Warenlager**
Warehouse
Entrepôt

(30) Priorität: 20.09.2006 DE 202006014375 U
(43) Veröffentlichungstag der Anmeldung: 26.03.2008
(73) Patentinhaber: Gebr. Willach GmbH, 53809 Ruppichteroth (DE)
(72) Erfinder: Willach, Jens, 53783 Eitorf (DE); Schumacher, Heribert, 53809 Ruppichteroth (DE); Feindt, Arend, 53721 Siegburg (DE)
(74) Vertreter: von Kreisler Selting Werner

(56) Entgegenhaltungen:
- WO-A-99/03765
- DE-A1- 10 000 684
- DE-A1-102004 012 133
- DE-U1- 20 215 479

## Beschreibung

Die Erfindung betrifft ein Warenlager mit zahlreichen Lagerplätzen und einer Wareneingabevorrichtung, in welche manuell Waren eingegeben werden können, und mit einem Manipulator, der Waren aus der Wareneingabevorrichtung entnehmen und zu einem Lagerplatz transportieren kann.

Ein derartiges Warenlager ist in EP 1 407 984 B1 (Willach) beschrieben. Das Warenlager dient zur Aufnahme von Packungen, die beispielsweise Medikamente enthalten können, in Ziehregalen. Das Warenlager enthält eine Transportvorrichtung, die entlang eines Ganges, zu dessen beiden Seiten sich Ziehregale befinden, verfahrbar ist. Die Transportvorrichtung trägt einen Manipulator, der im Stande ist, die Packungen aus einem der Ziehregale zu entnehmen und sie an eine Aufnahmevorrichtung zu transportieren, an die sich ein Transportband anschließt. Beim Einlagern von Packungen in das Regallager werden die Packungen manuell in ein Wareneingaberegal eingelegt, von dem Manipulator ergriffen und an eine Lagerstelle transportiert.

EP 0 620 528 B2 (Schausten) beschreibt einen Warenannahmeautomaten mit automatischer Vereinzelung und Vorsortierung eingegebener Packungen. Ein auf den Packungen angebrachter Barcode wird mit einem Scanner gelesen, um die Packung zu identifizieren.

DE 10 2004 012 133 A1 (Indunorm) beschreibt einen Warenannahmeautomaten mit einem trichterförmigen Einwurf, einem sich daran anschließenden Stufenförderer, der die Packungen auf eine horizontale Ablagefläche transportiert und einer Kamera, die die auf der Ablagefläche liegenden Packungen fotografiert. Mit Hilfe einer Bildverarbeitung erfolgt eine Erkennung der Packungen, einschließlich der Position und der Dimensionen. Aufgrund dieser Daten kann die Packung an einer geeigneten Lagerstelle eines Lagerautomaten abgelegt werden.

Im Stand der Technik sind Warenlager entweder mit einer manuellen Wareneingabevorrichtung ausgestattet oder mit einem Warenannahmeautomaten, der die ungeordnet zugeführten Waren vereinzelt, ausrichtet, identifiziert und zur Übergabe an einen automatisch gesteuerten Manipulator vorbereitet. Der vom Warenannahmeautomaten durchgeführte Vorgang, bei dem die Waren einzeln erfasst und verarbeitet werden, kann bei größeren Warensendungen eine lange Zeit in Anspruch nehmen. In dieser Zeit steht das Warenlager nicht zur Entgegennahme anderweitiger Waren, die nicht zu der betreffenden Charge gehören, zur Verfügung. Normalerweise hat die Warenausgabe Vorrang gegenüber der Warenannahme. Dies bedeutet, dass eine Anforderung einer Ware mit höchster Priorität ausgeführt wird, während die Einlagerung dann unterbrochen wird. Hierdurch wird die Wareneingabe noch zusätzlich verzögert.

Warenlager der hier in Betracht kommenden Art sind häufig Apothekenlager, in denen Apothekenprodukte, die in quaderförmigen Packungen enthalten sind, gelagert werden. Die Packungen sind mit einer Identifizierung, beispielsweise einem Barcode, versehen, die von einer Leseeinrichtung gelesen werden kann, um die Packung nach Inhalt und anderen Parametern zu identifizieren.

Der Erfindung liegt die Aufgabe zugrunde, ein Warenlager zu schaffen, das eine erhöhte Flexibilität bezüglich der Einlagerung von Waren bietet und insbesondere für Apotheken geeignet ist.

Das erfindungsgemäße Warenlager ist durch den Anspruch 1 definiert. Es weist außer der Wareneingabevorrichtung einen Warenannahmeautomaten auf, der eine Eingabestelle zum ungeordneten Einwerfen von Waren aufweist, diese vereinzelt, identifiziert und nacheinander einer ebenfalls durch den Manipulator zugänglichen Übergabestation zuführt.

Die Kombination aus Warenannahmeautomaten und manueller Wareneingabevorrichtung erhöht wesentlich die Benutzerfreundlichkeit und Flexibilität des automatischen Warenlagers. So besteht die Möglichkeit, dass der Apotheker einem Kunden eine oder mehrere Packungen zur Ansicht übergibt. Zu diesem Zweck lässt er die Packungen von dem Manipulator nacheinander aus dem Warenlager holen. In Abhängigkeit von der Entscheidung des Kunden müssen anschließend eine oder mehrere Packungen in das Warenlager zurückgegeben werden. Da die Verwaltung des Warenlagers computerisiert ist, scheinen zunächst die entnommenen Packungen im Warenlager zu fehlen. Wenn in dieser Zeit der Warenannahmeautomat aktiv ist, hat der Apotheker keine Möglichkeit, in den Vorgang der automatischen Warenannahme einzugreifen und die vom Kunden abgelehnte Ware in kurzer Zeit wieder in das Warenlager zurückzuführen. Die manuelle Wareneingabevorrichtung zusätzlich zum Warenannahmeautomaten hat den Vorteil, dass auf eine in der Wareneingabevorrichtung manuell eingelagerte Packung unmittelbar durch den Manipulator zugegriffen werden kann, wenn hierfür eine Anforderung vorliegt. Durch die Wareneingabevorrichtung können dem automatischen Warenlager Packungen unmittelbar zugeführt werden, ohne dass sie erst den Warenannahmeautomaten durchlaufen müssen. Die manuelle Einlagerung in die Wareneingabevorrichtung und die Nutzung des Warenannahmeautomaten können gleichzeitig erfolgen, weil beide Betriebsweisen einander nicht ausschließen und vielmehr unabhängig voneinander laufen.

Der logistische Kreis der Einlagerung und Auslagerung wird auch für Sonderbestellungen eingehalten. Diese werden von dem Computersystem erfasst und beim Warenbestand berücksichtigt. An der Wareneingabevorrichtung oder an einem in unmittelbarer Nähe davon angeordneten Arbeitsplatz erfolgt das Einlesen der Identifizierung der manuell eingegebenen Waren. Wenn eine Identifizierung nicht eingegeben wurde, lässt die Wareneingabevorrichtung die manuelle Einlagerung dieser Packung nicht zu bzw. holt der Manipulator die Ware nicht aus der Wareneingabevorrichtung ab.

Eine bevorzugte Ausführungsform der Erfindung sieht vor, dass der Manipulator entlang eines Fahrweges verfahrbar ist, wobei zu beiden Seiten des Fahrweges Regalreihen angeordnet sind, dass der Fahrweg über das Ende der Regalreihen hinaus verlängert ist und dass der Warenannahmeautomat seitlich der Verlängerung des Fahrweges angeordnet ist. Hierbei kann der Warenannahmeautomat gewissermaßen in das Regallager integriert werden, in dem Sinne, dass er eine der beiden Regalreihen verlängert.

Der Aufbau des Warenlagers kann unterschiedliche Formen haben. Vorzugsweise ist jedoch vorgesehen, dass das Warenlager definierte gegeneinander abgegrenzte Lagerplätze für jeweils eine Ware aufweist. Dies hat den Vorteil einer sicheren Zuordnung von Ware und Lagerplatz und ermöglicht auch eine definierte Positionierung der Ware am jeweiligen Lagerplatz zum Zwecke eines definierten Ergreifens durch den Manipulator. Ein weiterer Vorteil ist, dass bei Stromausfall die Waren auch manuell aus dem Lager entnommen werden können.

Gemäß einer bevorzugten Ausgestaltung der Erfindung ist der Manipulator entlang eines Fahrweges verfahrbar, an dessen Ende sich die Wareneingabevorrichtung befindet. Die Übergabestation des Warenannahmeautomaten ist in den Fahrweg des Manipulators hinein ausfahrbar. Dadurch wird erreicht, dass der Manipulator sowohl auf die Übergabestation des Warenannahmeautomaten als auch auf die manuelle Wareneingabevorrichtung zugreifen kann, ohne verschiedene Wege fahren zu müssen.

Die Wareneingabevorrichtung kann gegeneinander abgegrenzte Aufnahmeplätze unterschiedlicher Größen aufweisen. Damit kann bei der Wareneingabe die Fachgröße des betreffenden Lagerplatzes vorgegeben werden. Der benötigte Platz für die Wareneingabevorrichtung wird minimiert, weil Packungen unterschiedlicher Größen in unterschiedliche Aufnahmeplätze eingesetzt werden können.

Eine bevorzugte Ausgestaltung der Erfindung sieht vor, dass eine in der Übergabestation befindliche Ware bei der Abholung durch den Manipulator Vorrang hat gegenüber einer in der Wareneingabevorrichtung befindlichen Ware. Auf diese Weise wird der Lagerbestand schnellstmöglich aktualisiert.

Die Erfindung bietet die Möglichkeit, Waren anzufordern und diese Waren beliebig manuell wieder in das Regallager zurückzuführen, ohne dass die Rückführung sich in den relativ lange dauernden Vorgang des Warenannahmeautomaten einfügen müsste. Da sowohl die Wareneingabevorrichtung als auch die Übergabestation des Warenannahmeautomaten von demselben Manipulator bedient werden, ist der zusätzliche Aufwand gering. Die Erfindung ermöglicht ein verschachteltes bzw. gleichzeitiges Einführen von Packungen in das Warenlager über beide Wege.

Im Folgenden wird unter Bezugnahme auf die Zeichnungen ein Ausführungsbeispiel der Erfindung näher erläutert.

Es zeigen:
- Fig. 1: eine perspektivische Frontansicht des Warenlagers mit Warenannahmeautomaten und Wareneingabevorrichtung,
- Fig. 2: eine schematische Draufsicht des Warenlagers, während der Manipulator die Wareneingabevorrichtung bedient und
- Fig. 3: den Zustand, dass der Manipulator auf die Übergabestation des Warenannahmeautomaten zugreift.

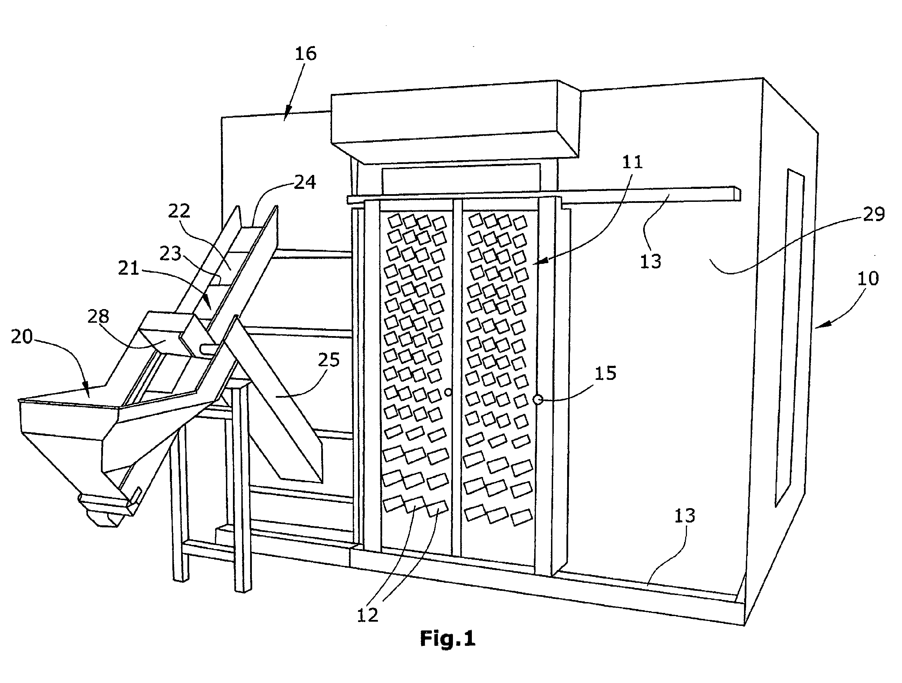

Figur 1 zeigt die Frontansicht eines automatischen Warenlagers 10, das zahlreiche Ziehregale enthält, die unter Steuerung durch einen Computer in einen zentralen Gang gefahren werden können. An der Frontseite des Warenlagers ist mittig die manuelle Wareneingabevorrichtung 11 angeordnet. Diese besteht aus einem Regal, das zahlreiche Fächer 12 aufweist. Die Fächer 12 sind schräg angeordnet. Sie haben unterschiedliche Größen, so dass darin Packungen unterschiedlicher Größen aufgenommen werden können. Die Packungen legen sich wegen der Schräganordnung jeweils an zwei definierte Wände des Faches an. In Figur 1 ist die Eingabeseite der Wareneingabevorrichtung dargestellt, also diejenige Seite, in die manuell eine Packung eingelegt werden kann. Von der Rückseite her wird die Packung später durch den Manipulator ergriffen.

Die Wareneingabevorrichtung 11 ist entlang horizontaler Führungsschienen 13 geführt, so dass sie beiseite geschoben werden kann, um den dahinter befindlichen Gang 14 zum Betreten freizugeben. Zum Entriegeln der Wareneingabevorrichtung zum Zwecke des Verschiebens dienen entsprechende Griffe 15.

Auf einer Seite neben der Wareneingabevorrichtung 11 befindet sich der Warenannahmeautomat 16. Dieser enthält eine vor dem Gehäuse des Warenlagers 10 angeordnete Eingabestelle 20, bei der es sich hier um einen Trichter handelt, in weichen der aus einzelnen Packungen bestehende Inhalt eines Warenbehälters wahllos hineingeschüttet werden kann. Zum Einlagern werden die angelieferten Packungen, die unsortiert sind, manuell in den Trichter eingefüllt. Von der Eingabestelle 20 führt eine Transportvorrichtung 21, die im vorliegenden Fall ein Transportband 22 mit querlaufenden Stollen 23 aufweist, zu einer Abgabestelle 24, die sich am oberen Ende der Transportvorrichtung 21 befindet. Die Transportvorrichtung 21 ist hier ein Steilförderer. Zu der Eingabestelle 20 führt ferner ein Rücklaufförderer 25, der aus dem Warenannahmeautomaten 16 herausführt und Packungen, die eine unrichtige Orientierung hatten, zur Eingabestelle zurückführt, damit diese die Transportvorrichtung 21 noch einmal durchlaufen.

Im Verlaufe der Transportvorrichtung ist über dem Transportband 22 ein Abstreifer 28 in Form einer rotierenden Bürste angeordnet. Der Abstreifer verhindert, dass zwei Packungen sich ganz oder teilweise überlagern.

In dem Warenannahmeautomaten werden die Packungen vereinzelt, in eine definierte Ausrichtung gebracht, von einer Leseeinrichtung identifiziert und entweder an eine Übergabestation verbracht oder auf den Rücklaufförderer 25 oder in einen Abfallkorb.

In Figur 1 ist ferner die Schaltzentrale 29 sichtbar, die die Stromversorgung und die Steuerung des automatischen Warenlagers enthält.

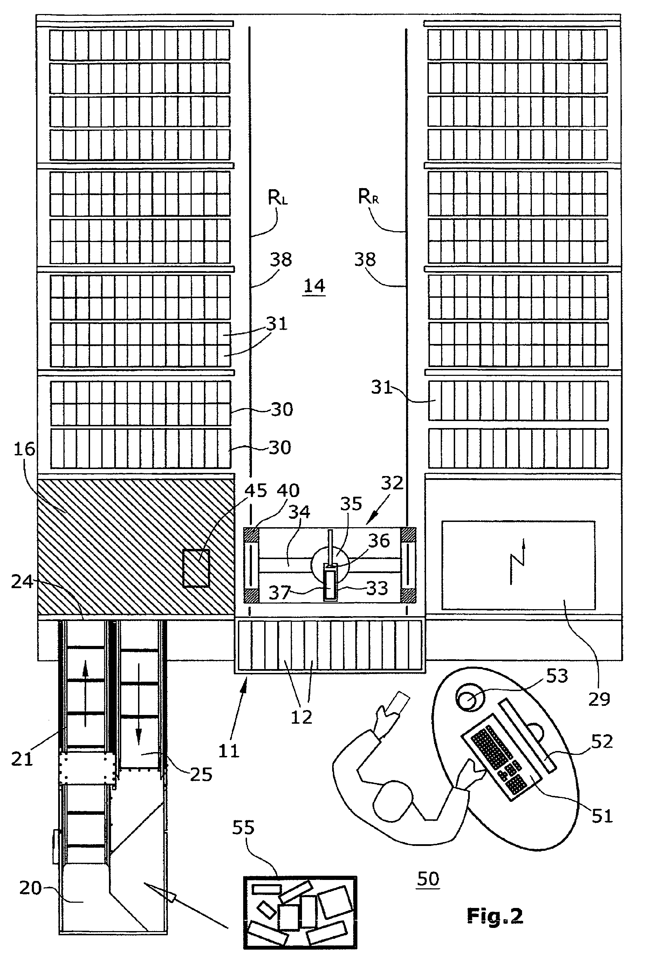

Figur 2 zeigt einen Grundriss des automatischen Warenlagers, in das der Warenannahmeautomat 16 integriert ist. Das Warenlager ist generell in gleicher Weise ausgebildet wie dasjenige von EP 1 407 984 B1. Es weist beidseitig des Ganges 14 Ziehregale 30 auf, die jeweils zahlreiche Fächer 31 zur Aufnahme von Waren enthalten. Die Fächer sind von unterschiedlicher Größe, so dass unterschiedlich große Packungen platzsparend aufgenommen werden. Jedes Ziehregal 30 kann auf Schienen, die quer zum Gang 14 verlaufen, in den Gang 14 hinein ausgezogen werden, so dass es in den Erfassungsbereich des Manipulators 32 gelangt. Die Ziehregale 30 sind in zwei Regalreihen R_{R} und R_{L} angeordnet, wobei die Regalreihe R_{R} rechts des Ganges 14 und die Regalreihe R_{L} links des Ganges 14 angeordnet ist.

Der von den Schienen 38 gebildete Fahrweg ist nach vorne über die Regalreihen hinaus verlängert, so dass der Manipulator 32 in dem Gang 14 eine Parkposition einnehmen kann. Seitlich von dieser Parkposition und in Verlängerung der einen Regalreihe R_{L} befindet sich der Warenannahmeautomat 16, der somit gewissermaßen in die Regalreihe R_{L} integriert ist.

Der Manipulator ist ebenfalls in gleicher Weise ausgebildet wie derjenige von EP 1 407 984 B1. Er weist eine Transportvorrichtung 40 auf, die als Portal ausgebildet ist und entlang des Ganges 14 auf Schienen 38 verfahrbar ist. Auf einem Vertikalschlitten 34 der Transportvorrichtung 40 ist ein Horizontalschlitten 35 mit einem Drehgestell verfahrbar. Der Horizontalschlitten 35 trägt einen Warenträger 33 und einen Sauggreifer 36, der in Längsrichtung des Warenträgers gesteuert verfahrbar ist. Eine in einem Fach 12 der Wareneingabevorrichtung 11 liegende Packung 37 wird durch Einführen des Sauggreifers 36 von hinten in das Fach 12 auf den Warenträger 33 überführt und von dem Sauggreifer 36 festgehalten. Der Manipulator 32 fährt dann in dem Gang 14 nach hinten, um die Ware in eines der Ziehregale 30 zu überführen. Dieses Ziehregal wird in den Gang hinein herausgezogen, so dass das Zielfach in der Bewegungsrichtung des Warenträgers 33 liegt. Durch Vorschieben des Sauggreifers 36 wird die Packung 37 in das Zielfach überführt.

Damit die Fächer 31 von beiden Seiten her durch den Manipulator 32 zugänglich sind, kann der Warenträger 33 um 180° gedreht werden, so dass er entweder nach vorne oder nach hinten zeigt.

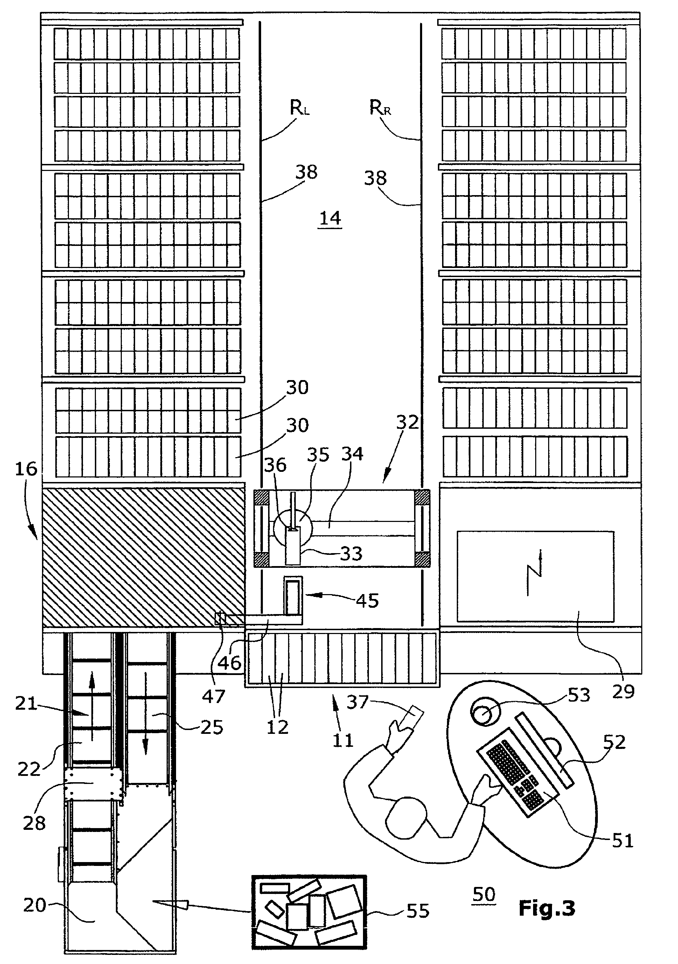

Der Warenannahmeautomat 16, dessen Einzelheiten hier nicht im Einzelnen dargestellt sind, weist eine Übergabestation 45 auf, auf die die Ware, die als einlagerungsfähig beurteilt wurde, verbracht wird. Diese Übergabestation 45 kann seitlich in den Fahrweg des Manipulators 32 hineinbewegt werden, so dass sie mit dem Warenträger 33 zur Übernahme der betreffenden Ware erreicht werden kann, wie dies in Figur 3 dargestellt ist. Gemäß Figur 3 ist die Übergabestation 45 an einem Lenker 46 angebracht, der um eine horizontale Achse 47, die parallel zur Längsrichtung des Ganges 14 verläuft, schwenkbar ist. Dadurch kann die Übergabestation 45 seitlich in den Gang 14 hinein aus dem Warenannahmeautomaten 16 herausbewegt werden, während sie im übrigen in den Warenannahmeautomaten 16 zurückgezogen ist, wie in Figur 2 dargestellt. Gemäß Figur 3 fährt der Vertikalschlitten 34 in eine vorbestimmte Höhe und der Horizontalschlitten 35 fährt auf eine vorbestimmte Horizontalposition, um mit dem Warenträger 33 die Übergabestation 45 zu treffen. Die Übergabestation 45 ist ein Fach, ähnlich den Fächern 12 der Wareneingabevorrichtung.

In der Nähe der Wareneingabevorrichtung 11 befindet sich ein Arbeitsplatz 50 mit einer Eingabevorrichtung in Form einer Tastatur 51, einem Bildschirm 52 und einer Leseeinrichtung 53 zum Lesen einer auf der Packung 37 befindlichen Identifizierung. Die Leseeinrichtung 53 kann beispielsweise ein Barcodeleser sein. Es besteht auch die Möglichkeit, die Waren mit Transpondern auszustatten, die die Identifizierung enthalten und über Radiofrequenz mit einem Lesegerät korrespondieren. Der Arbeitsplatz 50 befindet sich an der Eingabeseite der Wareneingabevorrichtung, so dass der Bediener die Packung 37, nachdem diese mit der Leseeinrichtung 53 gescannt wurde, in ein durch den Lagercomputer zugewiesenes Fach der Wareneingabevorrichtung 11 von vorne einlegen kann. Die Fächer der Wareneingabevorrichtung haben jeweils einen Detektor, der das Vorhandensein einer Packung in dem Fach feststellt. Jedes Fach hat ferner eine Anzeigevorrichtung in Form einer Leuchtdiode. Nach Einlesen einer Packung 37 mit der Leseeinrichtung 53 bestimmt der Computer eines der Fächer der Wareneingabevorrichtung, in welchem die Ware abgelegt werden soll. Die Leuchtdiode dieses Faches leuchtet auf und zeigt dem Bediener an, in welches Fach die Ware gelegt werden soll. Der Detektor dieses Faches gibt ein Bestätigungssignal an den Computer. Auf diese Weise wird dem Lagercomputer mitgeteilt, in welchem der Fächer 12 der Wareneingabevorrichtung eine bestimmte abzuholende Ware liegt. Der Lagercomputer weiß nun, dass eine Ware zur Abholung bereit liegt und er steuert den Manipulator 32 auf das betreffende Fach 12, um die Ware zu entnehmen und in eines der Regale 30 zu überführen.

In den Figuren 2 und 3 ist dargestellt, wie eine Warenlieferung in einem Behälter 55 enthalten ist. Der Behälter 55 wird in den Trichter der Eingabestelle 20 entleert. Die in der Lieferung enthaltenen Waren werden von dem Warenannahmeautomaten 16 in willkürlicher Reihenfolge einzeln aufgenommen, beurteilt und in die Übergabestation 45 übergeben, die anschließend in den Gang 14 hinein ausgefahren wird. Dort wird die bereits in dem Warenannahmeautamaten 16 identifizierte Ware von dem Manipulator übernommen und in einem Regalfach geeigneter Größe abgelegt.

Unabhängig von dem beschriebenen Massen-Einlagerungsvorgang kann der Bediener manuell Waren 37 in die Wareneingabevorrichtung 11 legen. Dadurch können beispielsweise Rückläufer, nämlich Packungen, die nur zur Ansicht aus dem Regallager entnommen wurden und anschließend zurückgelegt werden müssen, wieder in den logistischen Kreislauf eingegeben werden. Dadurch wird auch der Lagerbestand im Lager-Computer stets auf dem aktuellen Stand gehalten.

Anders als bei dem beschriebenen Ausführungsbeispiel kann das Warenlager anstelle der Ziehregale auch Schubladen enthalten oder einfache Fachböden, auf denen die Waren mit oder ohne physische Abgrenzung der Lagerplätze abgelegt werden.

## Patentansprüche

1. Warenlager mit zahlreichen Lagerplätzen (31) und einer Wareneingabevorrichtung (11), in welche manuell Waren eingelegt werden können, und mit einem Manipulator (32), der Waren aus der Wareneingabevorrichtung (11) entnehmen und zu einem Lagerplatz (31) transportieren kann,
**dadurch gekennzeichnet,**
**dass** ein Warenannahmeautomat (16) vorgesehen ist, der eine Eingabestelle (20) zum ungeordneten Einwerfen von Waren aufweist, diese vereinzelt, identifiziert und nacheinander einer ebenfalls durch den Manipulator (32) zugänglichen Übergabestation (45) zuführt.

2. Warenlager nach Anspruch 1, **dadurch gekennzeichnet, dass** das Warenlager gegeneinander abgegrenzte Lagerplätze (31) für jeweils eine Ware aufweist.

3. Warenlager nach Anspruch 1 oder 2, **dadurch gekennzeichnet, dass** der Manipulator (32) entlang eines Fahrweges verfahrbar ist, an dessen Ende sich die Wareneingabevorrichtung (11) befindet und dass die Übergabestation (45) des Warenannahmeautomaten (16) in den Fahrweg hinein ausfahrbar ist.

4. Warenlager nach einem der Ansprüche 1 - 3, **dadurch gekennzeichnet, dass** der Manipulator (32) entlang eines Fahrweges verfahrbar ist, wobei zu beiden Seiten des Fahrweges Regalreihen (R_{R}, R_{L}) angeordnet sind, dass der Fahrweg über das Ende mindestens einer der Regalreihen hinaus verlängert ist, und dass der Warenannahmeautomat (16) seitlich der Verlängerung des Fahrweges angeordnet ist.

5. Warenlager nach einem der Ansprüche 1 - 4, **dadurch gekennzeichnet, dass** ein Detektor feststellt, wenn sich in der Wareneingabevorrichtung (11) mindestens eine Ware befindet.

6. Warenlager nach einem der Ansprüche 1 - 5, **dadurch gekennzeichnet, dass** die Wareneingabevorrichtung (11) gegeneinander abgegrenzte Aufnahmeplätze (12) unterschiedlicher Größen aufweist.

7. Warenlager nach einem der Ansprüche 1 - 6, **dadurch gekennzeichnet, dass** eine in der Übergabestation (45) befindliche Ware bei der Abholung durch den Manipulator (32) Vorrang hat gegenüber einer in der Wareneingabevorrichtung (11) befindlichen Ware.

8. Warenlager nach einem der Ansprüche 1 - 7, **dadurch gekennzeichnet, dass** die Wareneingabevorrichtung (11) von einem Arbeitsplatz (50) mit Computerterminal aus erreichbar ist, wobei der Arbeitsplatz eine Leseeinrichtung (53) zum Lesen einer Identifizierung an der Ware aufweist.

## Claims

1. A warehouse comprising a plurality of storage sites (31) and an article input device (11) into which articles may be placed manually, and comprising a manipulator (32) adapted to take articles from the article input device (11) and to transport them to a storage site (31),
**characterized in that**
an automatic article receiving device (16) is provided, which device has an input site (20) for the unsorted insertion of articles, separates, identifies and supplies the same one after the other to a transfer station (45) also accessible to the manipulator (32).

2. The warehouse according to claim 1, **characterized in that** the warehouse comprises mutually delimited storage sites (31) for one article each.

3. The warehouse of claim 1 or 2, **characterized in that** the manipulator (32) is displaceable along a track at the end of which the article input device (11) is situated, and that the transfer station (45) of the automatic article receiving device (16) is adapted to be telescoped into the track.

4. The warehouse of one of claims 1 - 3, **characterized in that** the manipulator (32) is displaceable along a track, with shelf rows (R_{R}, R_{L}) being arranged on either side of the track, that the track is extended beyond the end of at least one of the shelf rows, and that the automatic article receiving device (16) is arranged laterally of the extension of the track.

5. The warehouse of one of claims 1 - 4, **characterized in that** a detector detects the presence of at least one article in the article input device (11).

6. The warehouse of one of claims 1-5, **characterized in that** the article input device (11) has mutually delimited receiving sites (12) of different sizes.

7. The warehouse of one of claims 1-6, **characterized in that**, when it comes to being fetched by the manipulator (32), an article present in the transfer station (45) has priority over an article present in the article input device (11).

8. The warehouse of one of claims 1-7, **characterized in that** the article input device (11) can be reached from a workplace (50) equipped with a computer terminal, the workplace comprising a reading means (53) for reading an identification on the article.

## Revendications

1. Entrepôt comprenant de nombreux emplacements de stockage (31) et un dispositif d'introduction d'articles (11) dans lequel des articles peuvent être insérés manuellement, et comprenant un manipulateur (32) apte à prélever des articles du dispositif d'introduction d'articles (11) et à les acheminer vers un emplacement de stockage (31), **caractérisé en ce qu'**est prévu un automate de réception d'articles (16) qui présente un emplacement d'entrée (20) pour y introduire des articles de façon désordonnée, et qui individualise, identifie et achemine ceux-ci l'un après l'autre vers une station de transfert (45) également accessible par le manipulateur (32).

2. Entrepôt selon la revendication 1, **caractérisé en ce que** l'entrepôt présente des emplacements de stockage (31) délimités les uns par rapport aux autres pour recevoir chacun un article.

3. Entrepôt selon la revendication 1 ou 2, **caractérisé en ce que** le manipulateur (32) est déplaçable le long d'une trajectoire de déplacement à l'extrémité de laquelle se trouve le dispositif d'introduction d'articles (11) et **en ce que** la station de transfert (45) de l'automate de réception d'articles (16) peut être déployée à l'intérieur de la trajectoire de déplacement.

4. Entrepôt selon l'une des revendications 1 à 3, **caractérisé en ce que** le manipulateur (32) est déplaçable le long d'une trajectoire de déplacement, des rangées de rayonnages (R_{R}, R_{L}) étant disposées des deux côtés de la trajectoire de déplacement, **en ce que** la trajectoire de déplacement se prolonge au-delà de l'extrémité d'au moins l'une des rangées de rayonnages, et **en ce que** l'automate de réception d'articles (16) est disposé sur le côté du prolongement de la trajectoire de déplacement.

5. Entrepôt selon l'une des revendications 1 à 4, **caractérisé en ce qu'**un détecteur détermine quand au moins un article est présent dans le dispositif d'introduction d'articles (11).

6. Entrepôt selon l'une des revendications 1 à 5, **caractérisé en ce que** le dispositif d'introduction d'articles (11) présente des emplacements de réception (12) de dimensions différentes, délimités les uns par rapport aux autres.

7. Entrepôt selon l'une des revendications 1 à 6, **caractérisé en ce qu'**un article se trouvant dans la station de transfert (45) a priorité, lors de sa prise en charge par le manipulateur (32) par rapport à un article se trouvant dans le dispositif d'introduction d'articles (11).

8. Entrepôt selon l'une des revendications 1 à 7, **caractérisé en ce que** le dispositif d'introduction d'articles (11) est accessible à partir d'un poste de travail (50) doté d'un terminal informatique, le poste de travail étant pourvu d'un dispositif de lecture (53) permettant de lire une identification sur l'article.
